# EUROPEAN PATENT APPLICATION

(11) **EP 4 797 428 A1**
(43) Date of publication of application: **26.08.2026**
(21) Application number: 26155779.7
(22) Date of filing: 02.02.2026
(51) Int. Cl.: H01M 50/548, H01M 50/342, H01M 50/15, H01M 50/133, H01M 50/119, H01M 50/103, H01M 10/04

(54) **METHOD OF MANUFACTURING BATTERY CASE AND METHOD OF MANUFACTURING BATTERY**

(30) Priority: 25.02.2025 JP 2025028154
(71) Applicant: Prime Planet Energy & Solutions, Inc., Chuo-ku, Tokyo 103-0022 (JP)
(72) Inventor: MARUBAYASHI, Hironori, Tokyo, 103-0022 (JP); OSHIMA, Kazuki, Tokyo,, 103-0022 (JP)
(74) Representative: Kuhnen & Wacker Patent- und Rechtsanwaltsbüro PartG mbB

(57) **Abstract**

A method of manufacturing a battery case includes: forming a first thin portion (12A) and a second thin portion (12B) in a metal plate (10); cutting the metal plate (10) into a substantially rectangular shape having a pair of first end sides (21A, 21B) and a pair of second end sides (22A, 22B), wherein one of the pair of first end sides (21A, 21B) is formed by cutting the first thin portion (12A), and the other of the pair of first end sides (21A, 21B) is formed by cutting the second thin portion (12B); after the cutting the metal plate (10), bending the metal plate (10) into a tubular shape; and joining one of the pair of second end sides (22A, 22B) and the other of the pair of second end sides (22A, 22B) after the bending the metal plate (10) into the tubular shape.

## Description

### CROSS REFERENCE TO RELATED APPLICATIONS

This nonprovisional application is based on Japanese Patent Application No. 2025-028154 filed on February 25, 2025 with the Japan Patent Office, the entire contents of which are hereby incorporated by reference.

### BACKGROUND OF THE INVENTION

### Field of the Invention

The present technology relates to a method of manufacturing a battery case and a method of manufacturing a battery.

### Description of the Background Art

Each of Japanese Patent Laying-Open No. H09-265966 and Japanese Patent Laying-Open No. 2014-10910 describes that a step is provided in a case opening of a prismatic battery, for example.

### SUMMARY OF THE INVENTION

A tubular battery case provided with openings at its both ends is required to realize stable joining to a sealing plate. Conventional battery cases still have room for improvement.

An object of the present technology is to provide a method of manufacturing a battery case and a method of manufacturing a battery so as to realize stable joining between the battery case and a sealing plate.

The present technology provides the following method of manufacturing a battery case and the following method of manufacturing a battery.
[1] A method of manufacturing a battery case, the method comprising: forming a first thin portion in a metal plate by providing a first recess in a first surface of the metal plate, and forming a second thin portion in the metal plate by providing a second recess in the first surface of the metal plate; cutting the metal plate into a substantially rectangular shape having a pair of first end sides and a pair of second end sides, wherein one of the pair of first end sides is formed by cutting the first thin portion, and the other of the pair of first end sides is formed by cutting the second thin portion; after the cutting the metal plate, bending the metal plate into a tubular shape such that one of the pair of second end sides and the other of the pair of second end sides are in abutment with each other and the first surface is located on an inner surface side; and joining one of the pair of second end sides and the other of the pair of second end sides after the bending the metal plate into the tubular shape.
[2] The method of manufacturing the battery case according to [1], further comprising forming a gas-discharge valve constituted of a recess in a second surface of the metal plate opposite to the first surface.
[3] The method of manufacturing the battery case according to [2], wherein the forming the gas-discharge valve includes forming the recess in the second surface of the metal plate before the bending.
[4] The method of manufacturing the battery case according to [2], wherein the forming the gas-discharge valve includes forming the recess in the second surface during the bending the metal plate.
[5] The method of manufacturing the battery case according to any one of [1] to [4], wherein the bending the metal plate into the tubular shape includes bending the metal plate along a bending line that is in a form of a straight line extending in parallel with the pair of second end sides, the first thin portion includes a first region overlapping the bending line, and a second region separated from the bending line in a direction in which the pair of first end sides extend, the first region has a first length in a direction in which the pair of second end sides extend, and the second region has a second length in the direction in which the pair of second end sides extend, and the first length is larger than the second length.
[6] The method of manufacturing the battery case according to [5], wherein the second thin portion includes a third region overlapping the bending line, and a fourth region separated from the bending line in the direction in which the pair of first end sides extend, the third region has a third length in the direction in which the pair of second end sides extend, and the fourth region has a fourth length in the direction in which the pair of second end sides extend, and the third length is larger than the fourth length.
[7] The method of manufacturing the battery case according to any one of [1] to [6], wherein the metal plate is bent into a prismatic tubular shape.
[8] The method of manufacturing the battery case according to any one of [1] to [7], wherein an ordinary portion located between the first thin portion and the second thin portion is formed in the metal plate, a thickness of each of the first thin portion and the second thin portion is smaller than a thickness of a base material of the metal plate, and a thickness of the ordinary portion is substantially the same as the thickness of the base material of the metal plate.
[9] The method of manufacturing the battery case according to any one of [1] to [7], wherein a first thick portion adjacent to the first thin portion and a second thick portion adjacent to the second thin portion are formed in the metal plate, a thickness of each of the first thin portion and the second thin portion is smaller than a thickness of a base material of the metal plate, and a thickness of each of the first thick portion and the second thick portion is larger than the thickness of the base material of the metal plate.
[10] A method of manufacturing a battery, the method comprising: forming a first thin portion in a metal plate by providing a first recess in a first surface of the metal plate, and forming a second thin portion in the metal plate by providing a second recess in the first surface of the metal plate; cutting the metal plate into a substantially rectangular shape having a pair of first end sides and a pair of second end sides, wherein one of the pair of first end sides is formed by cutting the first thin portion, and the other of the pair of first end sides is formed by cutting the second thin portion; after the cutting the metal plate, bending the metal plate into a tubular shape such that one of the pair of second end sides and the other of the pair of second end sides are in abutment with each other and the first surface is located on an inner surface side; after the bending the metal plate into the tubular shape, forming a tubular battery case by joining one of the pair of second end sides and the other of the pair of second end sides; inserting an electrode assembly into the tubular battery case; sealing, by a first sealing plate, a first opening located on one side of the tubular battery case; and sealing, by a second sealing plate, a second opening located on the other side of the tubular battery case.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to one embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a plan view showing a metal plate according to one embodiment.
Fig. 8 is a cross sectional view along VIII-VIII in Fig. 7.
Fig. 9 is a plan view showing a plate-shaped member having a rectangular shape and obtained by cutting (trimming) the metal plate shown in Fig. 7.
Fig. 10 is a cross sectional view showing a joining portion between a case main body and a sealing plate.
Fig. 11 is a plan view showing a shape of a thin portion of a plate-shaped member according to a (first) modification.
Fig. 12 is a plan view showing a shape of a thin portion of a plate-shaped member according to a (second) modification.
Fig. 13 is a plan view showing a metal plate according to a (first) modification.
Fig. 14 is a cross sectional view showing a metal plate according to a (second) modification.
Fig. 15 is a flowchart showing a method of manufacturing the secondary battery according to one embodiment.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

Moreover, sizes such as width, length, and diameter of each member illustrated in the present specification are not limited to those shown in the figures, and can be appropriately changed. In the present specification, ordinal numbers such as "first" and "second" may be given to respective configurations, but these ordinal numbers do not limit priority, order, or the like unless explicitly defined.

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode. Further, the term "electrode plate" may collectively represent a positive electrode plate and a negative electrode plate.

The "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

In the present specification, the X direction may be referred to as a "width direction" of each of the secondary battery, the electrode assembly, and the case main body, the Z direction may be referred to as a "height direction" of the secondary battery or the case main body, and the Y direction may be referred to as a "thickness direction" of the secondary battery or the case main body.

### (Overall Configuration of Secondary Battery)

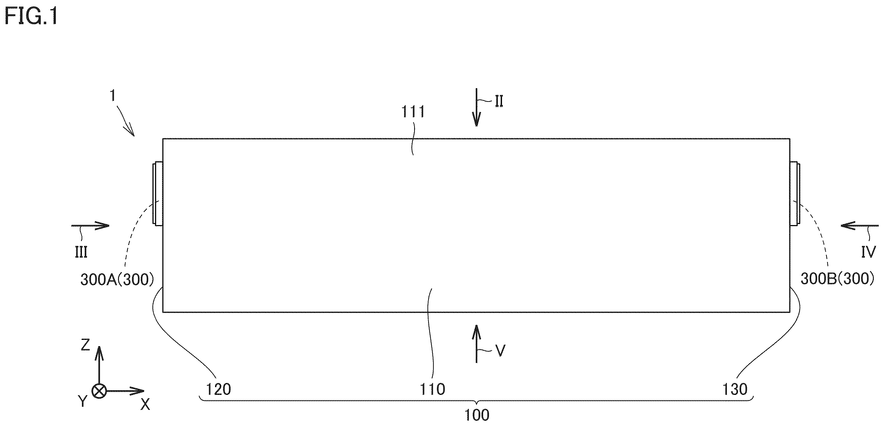

The overall configuration of a secondary battery 1 will be described with reference to Figs. 1 to 6. Secondary battery 1 includes a case 100, an electrode assembly 200, electrode terminals 300, and current collectors 400. Case 100 includes a case main body 110 (battery case), a sealing plate 120 (first sealing plate), and a sealing plate 130 (second sealing plate).

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

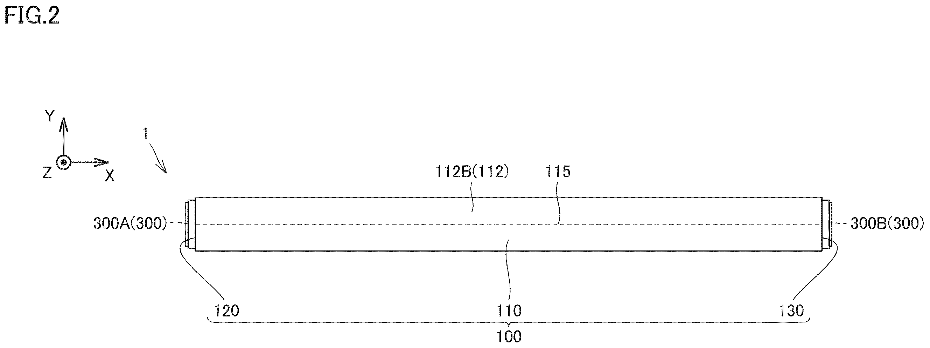

As shown in Figs. 1 and 2, sealing plate 120 and sealing plate 130 are provided at respective end portions of the case main body. Case main body 110 can be formed to have a prismatic tubular shape in, for example, the following manner: second end sides 22A, 22B of a below-described plate-shaped member 20 are brought into abutment with each other (joining portion 115 illustrated in Fig. 2) and are joined together. Each of the corners of the "prismatic tubular shape" may have a shape with a curvature. The secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 300 mm or more. In this way, secondary battery 1 can be formed to have a relatively large size (high capacity). The size (height) of case main body 110 in the Z direction is preferably about 200 mm or less, more preferably about 150 mm or less, and further preferably about 100 mm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to be substantially orthogonal to (intersect) each other. The pair of first side surface portions 111 and the pair of second side surface portions 112 are connected at their respective end portions. Each of the pair of first side surface portions 111 desirably has an area larger than that of each of the pair of second side surface portions 112.

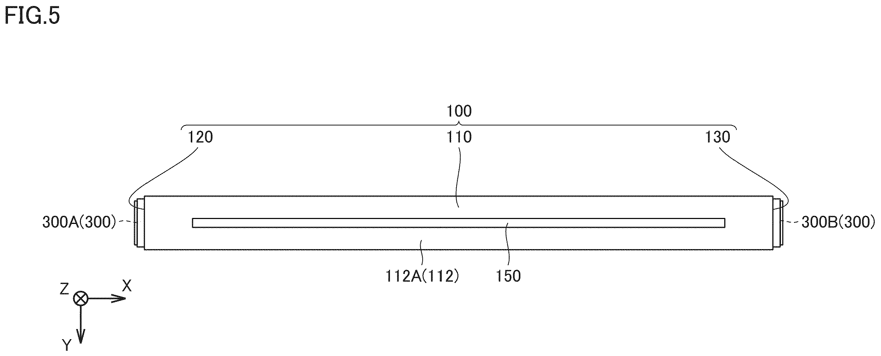

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape and arrangement of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1.

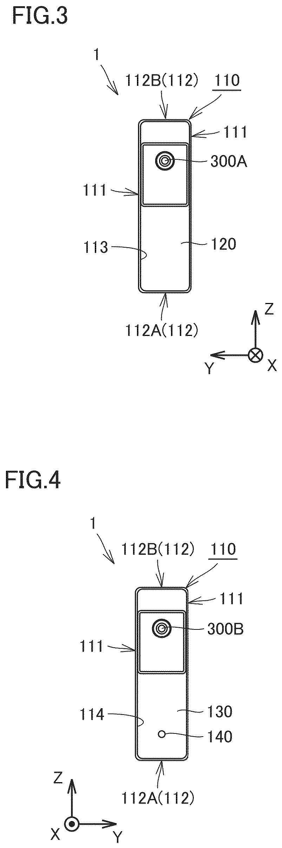

As shown in Fig. 3 and 4, an opening 113 (first opening) is provided at an end portion of case main body 110 on one side in the first direction (X direction), and an opening 114 (second opening) is provided at an end portion thereof on the other side (opposite side) in the first direction (X direction). Openings 113, 114 are sealed by sealing plates 120, 130, respectively.

Negative electrode terminal 300A is provided on sealing plate 120, and positive electrode terminal 300B is provided on sealing plate 130. Negative electrode terminal 300A is electrically connected to the negative electrode of electrode assembly 200, and positive electrode terminal 300B is electrically connected to the positive electrode of electrode assembly 200. The positions of negative electrode terminal 300A and positive electrode terminal 300B can be appropriately changed.

Sealing plate 130 is provided with an injection hole 140. Injection hole 140 has such a diameter that an electrolyte solution can be injected into case 100. Injection hole 140 is sealed by a sealing member (not shown). As the sealing member, for example, a blind rivet or another metal member can be used. The position of injection hole 140 can be appropriately changed.

Each of sealing plates 120, 130 has a substantially rectangular shape in which the Y direction corresponds to its short-side direction and the Z direction corresponds to its long-side direction. The substantially rectangular shape includes a rectangular shape and a generally rectangular shape such as a rectangular shape having corners each with a curvature. Each of sealing plate 120 and sealing plate 130 is composed of a metal. Specifically, each of sealing plate 120 and sealing plate 130 is composed of aluminum, an aluminum alloy, iron, an iron alloy, or the like.

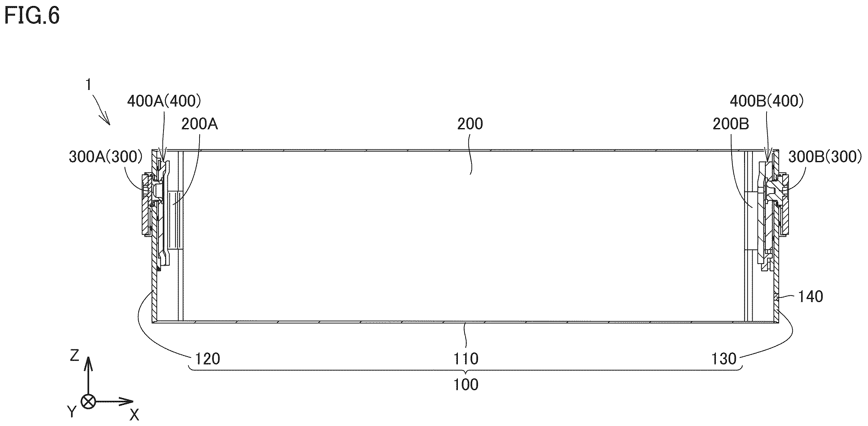

As shown in Fig. 6, case 100 accommodates electrode assembly 200. Electrode assembly 200 is accommodated in case 100 together with the electrolyte solution (electrolyte) (not shown) such that the long-side direction thereof is parallel to the X direction. Instead of the electrolyte solution, a solid electrolyte may be used.

Electrode assemblies 200 may be a stacked type electrode assembly in which negative electrode plates and positive electrode plates are alternately stacked one after the other with a separator being interposed therebetween, or may be a wound type electrode assembly in which a strip-shaped negative electrode plate and a strip-shaped positive electrode plate are wound with a strip-shaped separator being interposed therebetween.

Electrode assembly 200 includes a main body portion having a substantially rectangular shape, a negative electrode tab group 200A, and a positive electrode tab group 200B. Negative electrode tab group 200A is located at an end portion of electrode assembly 200 on one side (the sealing plate 120 side) in the X direction. Positive electrode tab group 200B is located at an end portion of electrode assembly 200 on the other side (the sealing plate 130 side) in the X direction.

Current collectors 400 include a negative electrode current collector 400A and a positive electrode current collector 400B. Electrode assembly 200 is electrically connected to negative electrode terminal 300A and positive electrode terminal 300B through negative electrode current collector 400A and positive electrode current collector 400B.

The configurations of electrode terminals 300 and current collectors 400 are not limited to those illustrated in Figs. 1 to 6, and for example, sealing plate 130 may serve as positive electrode terminal 300B.

### (Method of Manufacturing Case 100)

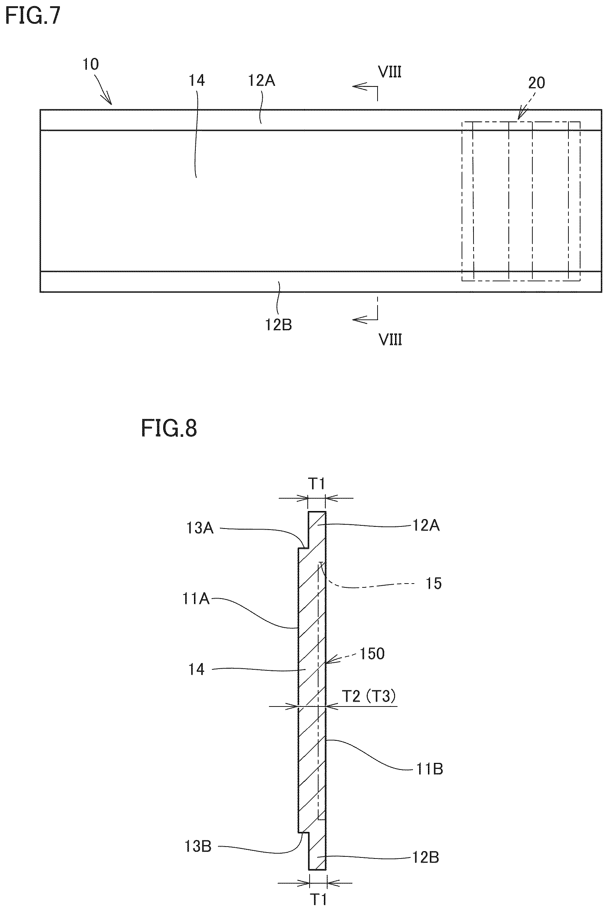

As shown in Figs. 7 and 8, an elongated metal plate 10 having a front surface 11A (first surface) and a rear surface 11B (second surface) is prepared, and a thin portion 12A (first thin portion) and a thin portion 12B (second thin portion) are formed by providing a recess 13A (first recess) and a recess 13B (second recess) in front surface 11A. Recesses 13A, 13B are provided, for example, by performing roller working or press working on metal plate 10. The thickness of metal plate 10 to be moved by the processing for forming each of recesses 13A, 13B may be moved to only the outer side (upper and lower end sides in Figs. 7 and 8) of metal plate 10, may be moved to only the inner side (center side in the upward/downward direction in Figs. 7 and 8) of metal plate 10, or may be moved to both the outer side and the inner side of metal plate 10.

In the example of Figs. 7 and 8, recesses 13A, 13B are formed at the end portions of metal plate 10, and stepped portions are formed only on one side (center side of metal plate 10) with respect to recesses 13A, 13B, but the implementations of recesses 13A, 13B are not limited thereto, and recesses 13A, 13B may be formed at positions shifted to the center side from the end portions of metal plate 10, and the stepped portions may be formed on both sides with respect to recesses 13A, 13B.

An ordinary portion 14 is provided between thin portions 12A, 12B. Each of the stepped portions formed at the edge portions of recesses 13A, 13B correspond to a boundary between a corresponding one of thin portions 12A, 12B and ordinary portion 14.

Each of thin portions 12A, 12B has a thickness T1. Ordinary portion 14 has a thickness T2. Thickness T1 of each of thin portions 12A, 12B is smaller than thickness T2 of ordinary portion 14 (T1<T2). That is, thickness T2 of ordinary portion 14 is larger than thickness T1 of each of thin portions 12A, 12B. In the example of Figs. 7 and 8, thickness T2 of ordinary portion 14 is substantially the same as thickness T3 of the base material of metal plate 10. It should be noted that the expression "the thicknesses are substantially the same" includes a case where the thicknesses are the same (T2=T3) and a case where the thicknesses are generally the same (for example, a case where T2/T3 falls within a range of 0.95 to 1.05). However, thickness T2 of ordinary portion 14 may be different from thickness T3 of the base material of metal plate 10 (for example, such that T2/T3 falls out of the range of 0.95 to 1.05). As an example, a central portion of first side surface portion 111 in which no unevenness or the like is formed corresponds to ordinary portion 14.

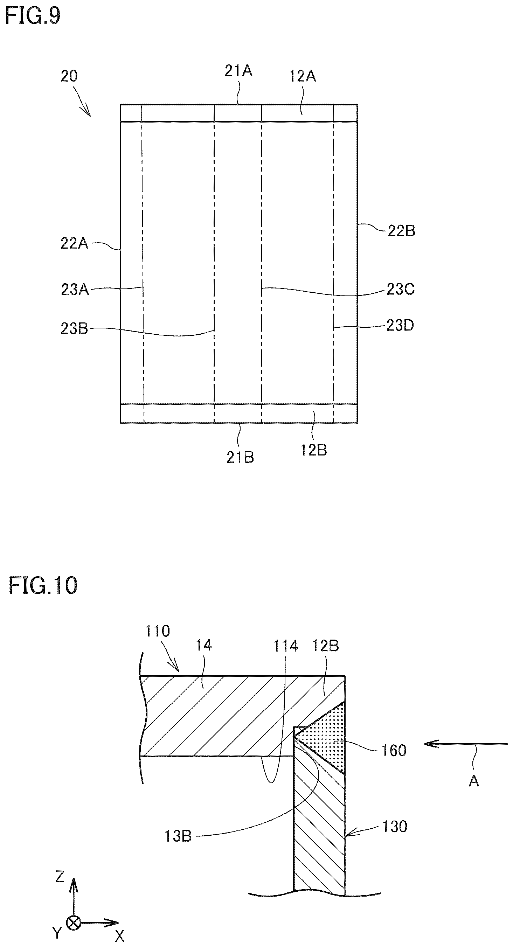

As shown in Fig. 9, plate-shaped member 20 is cut out by cutting (trimming) metal plate 10 in which thin portions 12A, 12B are formed. Plate-shaped member 20 has a rectangular shape including a pair of first end sides 21A, 21B and a pair of second end sides 22A, 22B. The pair of first end sides 21A, 21B extend substantially parallel to each other. The pair of second end sides 22A, 22B extend substantially parallel to each other. First end sides 21A, 21B and second end sides 22A, 22B extend in directions substantially orthogonal to (intersecting) each other. Here, the expression "substantially parallel" includes "parallel" and "generally parallel" (for example, a case where the slope of one with respect to the other is 5° or less). The expression "substantially orthogonal" includes "orthogonal" and "generally orthogonal" (for example, when the angle of intersection of one with the other is 85° to 95°).

First end side 21A is formed by cutting thin portion 12A of metal plate 10. First end side 21B is formed by cutting thin portion 12B of metal plate 10. A whole of each of first end sides 21A, 21B is preferably formed in the form of a straight line.

It should be noted that thin portion 12A may be formed, thin portion 12A may be cut, then thin portion 12B may be formed, and thin portion 12B may be cut. First end side 21A, first end side 21B, second end side 22A, and second end side 22B may be formed in any order.

Plate-shaped member 20 is bent from the state shown in Fig. 9 along four bending lines 23A, 23B, 23C, 23D such that front surface 11A is located on the inner surface side. Thus, plate-shaped member 20 is bent into a prismatic tubular shape. In the example of Fig. 9, second end sides 22A, 22B extend substantially parallel to four bending lines 23A, 23B, 23C, 23D.

In plate-shaped member 20 bent into the prismatic tubular shape, the pair of second end sides 22A, 22B are in abutment with each other. After plate-shaped member 20 is bent, second end sides 22A, 22B are joined to each other, thereby forming case main body 110 having a prismatic tubular shape. Second end sides 22A, 22B may be joined to each other by application of energy ray such as laser welding.

A region sandwiched between bending lines 23A, 23B and a region sandwiched between bending lines 23C, 23D in plate-shaped member 20 constitute the pair of first side surface portions 111 in case main body 110. A region of plate-shaped member 20 sandwiched between bending lines 23B, 23C constitutes second side surface portion 112A of case main body 110. A region sandwiched between second end side 22A and bending line 23A and a region sandwiched between second end side 22B and bending line 23D in plate-shaped member 20 constitute second side surface portion 112B in case main body 110.

After electrode assembly 200 is inserted into case main body 110 produced, openings 113, 114 are sealed by sealing plates 120, 130 as shown in Fig. 10. Fig. 10 shows only the structure on the opening 114 side (positive electrode side), but the same structure can also be employed on the opening 113 side (negative electrode side).

When a joining portion 160 between case main body 110 and sealing plate 130 is formed, energy ray such as laser light is applied in a direction of arrow A (Fig. 10). In the example of Fig. 10, sealing plate 130 is positioned due to sealing plate 130 being in abutment with the stepped surface located at the boundary between thin portion 12B and ordinary portion 14, but sealing plate 130 may not be necessarily in abutment with the stepped surface. Further, sealing plate 130 may have a portion fitted to the inner periphery of ordinary portion 14.

As described above, by applying the energy ray toward the stepped portion between thin portion 12B and ordinary portion 14, the energy ray is blocked by the stepped portion and is suppressed from reaching the inside of case main body 110, with the result that electrode assembly 200 can be protected.

According to the method of manufacturing case main body 110 according to the present embodiment, when producing case main body 110 provided with openings 113, 114 at both ends in the X direction, thin portions 12A, 12B can be stably formed. In particular, the dimensions (thickness and length) of thin portions 12A, 12B can be stabilized. As a result, case main body 110 and sealing plates 120, 130 can be stably joined together, with the result that secondary battery 1 excellent in reliability of joining portion 160 (sealing property of case 100 or the like) can be obtained.

The thickness (T1) of each of thin portions 12A, 12B is preferably about 0.2 mm or more, more preferably about 0.4 mm or more, and further preferably about 0.6 mm or more. Further, T1 is preferably about 1.0 mm or less, and more preferably about 0.7 mm or less.

The thickness (T2) of ordinary portion 14 falls within a range larger than T1, is preferably about 0.4 mm or more, and is more preferably about 0.6 mm or more. Moreover, T2 is preferably about 1.5 mm or less, more preferably about 1.2 mm or less, and further preferably about 1.0 mm or less.

By setting T1, T2 to fall within the above ranges, a step having a preferable height can be formed between each of thin portions 12A, 12B and ordinary portion 14 while sufficiently securing the strength of each of thin portions 12A, 12B. However, T1, T2 are not limited to falling within the above ranges.

The height (T2-T1) of the stepped portion between each of thin portions 12A, 12B and ordinary portion 14 is preferably about 0.2 mm or more, and is preferably about 0.3 mm or more. Thus, the positions or postures of sealing plates 120, 130 can be more stabilized, and a clearance between case main body 110 and each of sealing plates 120, 130 can be closed, with the result that the energy ray for forming joining portion 160 can be more effectively suppressed from reaching the inside of case main body 110. Therefore, sealing plates 120, 130 can be stably joined to each other, and electrode assembly 200 accommodated in case main body 110 can be effectively protected.

The height (T2-T1) of each of the stepped portions is preferably about 0.5 mm or less. Thus, electrode assembly 200 can be protected and the effect of positioning sealing plates 120, 130 at the stepped portions can be obtained without excessively reducing thickness T1 of each of thin portions 12A, 12B and without excessively increasing thickness T2 of ordinary portion 14.

The thickness (T1) of each of thin portions 12A, 12B may be partially different in the peripheral direction of each of openings 113, 114 of case main body 110. For example, the thickness (T11) of each of thin portions 12A, 12B at the straight portions of openings 113, 114 each having a substantially rectangular shape may be different from the thickness (T12) of each of thin portions 12A, 12B at the corner portions of openings 113, 114.

For example, by making the thickness (T12) of each of thin portions 12A, 12B at the corner portions of openings 113, 114 smaller than the thickness (T11) of each of thin portions 12A, 12B at the straight portions (T12<T11), the height (T2-T1) of the stepped portion at each of the four corners of openings 113, 114 can be high to receive a corresponding one of sealing plates 120, 130 more stably. The thickness difference (T11-T12) is preferably about 0.3 mm or less, and is more preferably about 0.1 mm or less. Thus, the clearance between case main body 110 and each of sealing plates 120, 130 at the time of forming joining portion 160 can be suppressed from being large, with the result that joining portion 160 can be formed more stably.

Further, the thickness (T1) of each of thin portions 12A, 12B may be different between a portion (on the side of the long side) corresponding to first side surface portion 111 and a portion (on the side of the short side) corresponding to second side surface portion 112.

When T1 on the side of the long side is made larger than T1 on the side of the short side, a welding nugget when welding (joining) case main body 110 and each of sealing plates 120, 130 on the side of the long side can be facilitated to be large, and the length of a portion at which the welding nugget is large can be made long. On the other hand, on the side of the short side, the step between each of thin portions 12A, 12B and ordinary portion 14 is made high and each of sealing plates 120, 130 can be stably received at the step, with the result that joining portion 160 can be stably formed.

When T1 on the side of the short side is made larger than T1 on the side of the long side, the step between each of thin portions 12A, 12B and ordinary portion 14 on the side of the long side can be high, with the result that the area of the step can be large and each of sealing plates 120, 130 can be received more stably. Therefore, joining portion 160 can be formed more stably.

A recess 15 is formed in rear surface 11B of metal plate 10. A thin region of metal plate 10 formed by recess 15 constitutes gas-discharge valve 150 of case 100. Recess 15 is preferably provided at a position corresponding to second side surface portion 112, which is the short side surface. Since an amount of deformation due to the bending of metal plate 10 (plate-shaped member 20) is reduced in the short side surface (second side surface portion 112) as compared with the long side surface (first side surface portion 111), a working pressure of gas-discharge valve 150 can be more stabilized by providing recess 15 at the position corresponding to the short side surface after the bending.

The processing for forming recess 15 for gas-discharge valve 150 may be performed onto metal plate 10 before cutting (before cutting out plate-shaped members 20), or may be performed onto each of plate-shaped members 20 cut out from metal plate 10. When recess 15 is formed in each of plate-shaped members 20, the processing for forming recess 15 may be performed before bending plate-shaped member 20, the processing for forming recess 15 may be performed onto plate-shaped member 20 (bent, for example, only along part of the plurality of bending lines) during the bending step, or the processing for forming recess 15 may be performed after bending plate-shaped member 20 into the prismatic tubular shape.

The planar shape of recess 15 (shape when viewed in the direction orthogonal to the extending direction of metal plate 10) can be appropriately changed, and can be, for example, a strip shape, a cross shape, a substantially circular shape, a substantially polygonal shape, or the like.

### (Modifications)

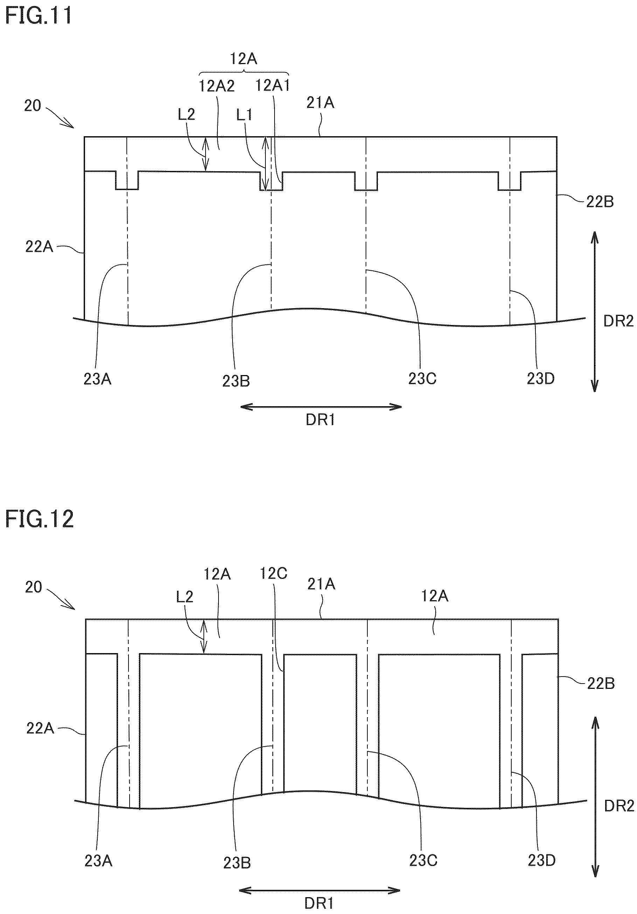

In a modification shown in Fig. 11, the dimension (L1, L2) of thin portion 12A in the extending direction (direction of arrow DR2) of each of second end sides 22A, 22B is varied depending on a position of plate-shaped member 20 in the extending direction (direction of arrow DR1) of first end side 21A.

As shown in Fig. 11, thin portion 12A includes regions 12A1 (first region) overlapping bending lines 23A, 23B, 23C, 23D, and regions 12A2 (second region) separated from bending lines 23A, 23B, 23C, 23D in the direction of arrow DR1. Each of regions 12A1 has a length L1 (first length) in the direction of arrow DR2, each of regions 12A2 has a length L2 (second length) in the direction of arrow DR2, and L1 is larger than L2 (L1>L2).

In Fig. 11, only the structure on the thin portion 12A side is shown, but the same structure can also be employed on the thin portion 12B side. That is, as with thin portion 12A shown in Fig. 11, the length (third length) of thin portion 12B in each of regions (third region) overlapping bending lines 23A, 23B, 23C, 23D can also be made larger than the length (fourth length) of thin portion 12B in each of regions (fourth region) separated from bending lines 23A, 23B, 23C, 23D.

By forming thin portions 12A, 12B to be relatively long at the positions overlapping bending lines 23A, 23B, 23C, 23D as in the example of Fig. 11, it is possible to suppress fluctuation of the position of the boundary surface (stepped surface) between each of thin portions 12A, 12B and ordinary portion 14 (variation of the direction of arrow DR2 in the peripheral direction of each of openings 113, 114) due to interference between portions of ordinary portion 14 at the bending portion of plate-shaped member 20. As a result, the reliability of joining portion 160 between case main body 110 and each of sealing plates 120, 130 can be further improved.

L1 (first length) is preferably about 1 mm or more, preferably about 2 mm or more, and more preferably about 4 mm or more. L1 is preferably about 10 mm or less, more preferably about 8 mm or less, and further preferably about 6 mm or less.

L2 (second length) is preferably about 0.5 mm or more, preferably about 1 mm or more, and more preferably about 2 mm or more. L2 is preferably about 5 mm or less, more preferably about 4 mm or less, and further preferably about 3 mm or less.

L1/L2 is preferably about 1.5 or more, and more preferably 2.0 or more. Further, L1/L2 is preferably about 3.0 or less. By setting L1/L2 to fall within the above range, it is possible to obtain the above-described effect of suppressing the fluctuation of the position of the boundary surface (stepped surface) between each of thin portions 12A, 12B and ordinary portion 14 while ensuring ease of the processing (movement) for the excess thickness at the time of the processing for forming thin portion 12A. However, L1 and L2 are not limited to falling within the above ranges.

In an example of Fig. 12, thin portions 12C are formed across regions (first region) overlapping bending lines 23A, 23B, 23C, 23D in the direction of arrow DR2. That is, thin portions 12A, 12B are connected by thin portions 12C. Also in the example of Fig. 12, as with the example of Fig. 11, the reliability of joining portion 160 between case main body 110 and each of sealing plates 120, 130 can be further improved.

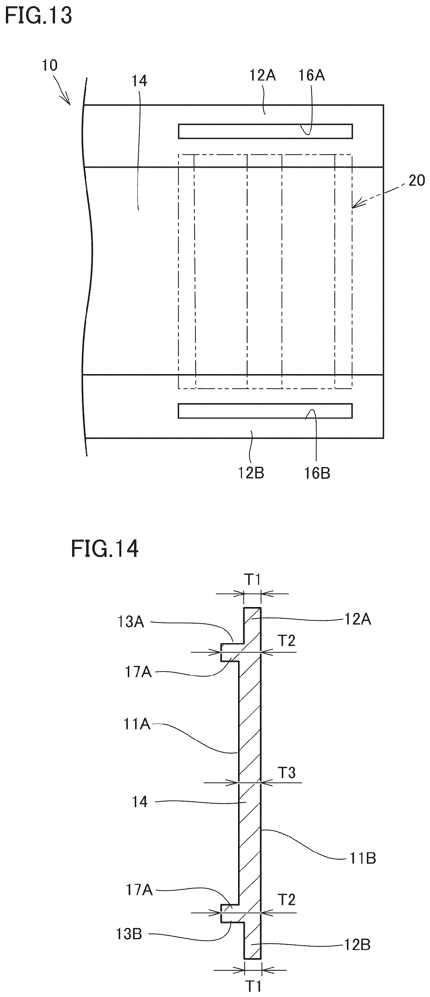

In a modification shown in Fig. 13, slit hole portions 16A, 16B are provided in advance in metal plate 10 located outside the trimming region of plate-shaped member 20. Each of slit hole portions 16A, 16B can be provided by punching metal plate 10.

According to the modification shown in Fig. 13, in the case where the thickness to be moved by the processing for forming recesses 13A, 13B is moved to the outside of metal plate 10, the thickness can be moved more stably, with the result that the plate thicknesses of thin portions 12A, 12B can be more stabilized in plate-shaped member 20 trimmed.

In a modification shown in Fig. 14, a thick portion 17A (first thick portion) adjacent to thin portion 12A and a thick portion 17B (second thick portion) adjacent to thin portion 12B are formed on both sides with respect to ordinary portion 14 in metal plate 10. The thickness (T1) of each of thin portions 12A, 12B is smaller than the thickness (T3) of ordinary portion 14, which is the thickness of the base material of metal plate 10, and the thickness (T2) of each of thick portions 17A, 17B is larger than the thickness (T3) of ordinary portion 14 (T2>T3>T1).

The structure shown in Fig. 14 is obtained by moving, to the inside of metal plate 10, at least part of the thickness of metal plate 10 moved by the processing for forming recesses 13A, 13B.

According to the modification shown in Fig. 14, since the thickness (T3) of ordinary portion 14 can be made thinner while securing the height (T2-T1) of the stepped portion formed by each of recesses 13A, 13B, it is possible to increase the volume of case main body 110 and to attain light weight of case main body 110.

### (Method of Manufacturing Secondary Battery)

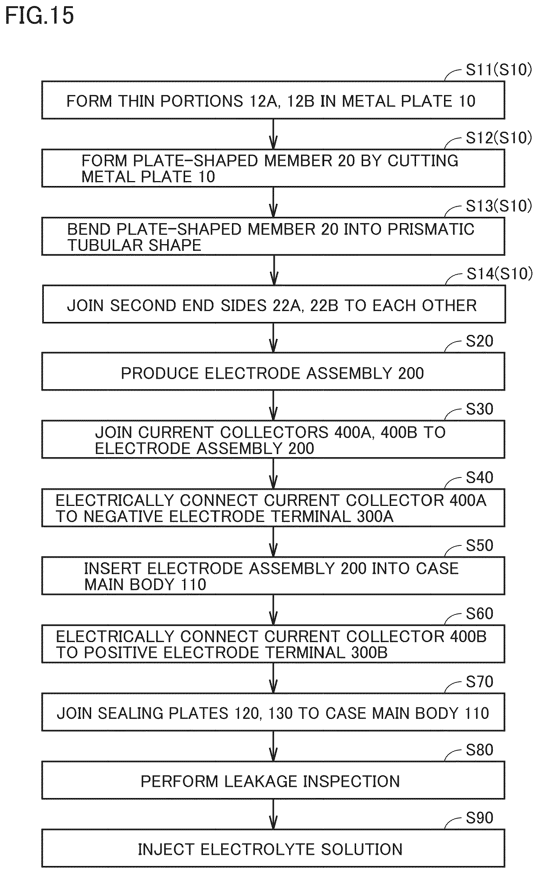

As shown in a flowchart of Fig. 15, a method of manufacturing secondary battery 1 includes: a step (S10) of producing case main body 110; a step (S20) of producing electrode assembly 200; a step (S30 to S70) of accommodating electrode assembly 200; an inspection step (S80); and an injection step (S90).

In the step (S10) of producing case main body 110, thin portions 12A, 12B are formed in metal plate 10 (S11), plate-shaped member 20 is formed by cutting metal plate 10 (S12), plate-shaped member 20 is bent into the prismatic tubular shape (S13), and second end sides 22A, 22B are joined to each other (S14).

After electrode assembly 200 is produced (S20), negative electrode current collector 400A and positive electrode current collector 400B are joined to electrode assembly 200 (S30). Next, negative electrode current collector 400A is electrically joined to negative electrode terminal 300A (S40).

Next, electrode assembly 200 is inserted into case main body 110 with the positive electrode current collector 400B side being inserted first (S50). Thereafter, positive electrode current collector 400B is electrically connected to positive electrode terminal 300B (S60).

Thereafter, openings 113, 114 of case main body 110 are sealed by sealing plates 120, 130 (S70). Sealing plate 120 seals opening 113 of case main body 110, and sealing plate 130 seals opening 114 of case main body 110. Thus, electrode assembly 200 is accommodated in case 100.

The above steps are not limited to being performed in the order shown in Fig. 15. For example, the order of the steps (S10, S20) of producing case main body 110 and electrode assembly 200 may be performed in an order opposite to the order in the example of Fig. 15 (the production of electrode assembly 200 is performed first), or the step (S10) of producing case main body 110 and the step (S20) of producing electrode assembly 200 may be simultaneously performed in parallel. Further, the procedure of S30 to S60 can also be appropriately changed. For example, electrode assembly 200 may be inserted into case main body 110 with the negative electrode current collector 400A side being inserted first.

After the above-described steps, an inspection such as a leakage inspection is performed (S80). Next, the electrolyte solution is injected into case 100 through injection hole 140 provided in sealing plate 130 (S90). Thereafter, injection hole 140 is sealed, thereby completing secondary battery 1.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A method of manufacturing a battery case, the method comprising:
forming a first thin portion (12A) in a metal plate (10) by providing a first recess (13A) in a first surface (11A) of the metal plate (10), and forming a second thin portion (12B) in the metal plate (10) by providing a second recess (13B) in the first surface (11A) of the metal plate (10);
cutting the metal plate (10) into a substantially rectangular shape having a pair of first end sides (21A, 21B) and a pair of second end sides (22A, 22B), wherein one of the pair of first end sides (21A, 21B) is formed by cutting the first thin portion (12A), and the other of the pair of first end sides (21A, 21B) is formed by cutting the second thin portion (12B);
after the cutting the metal plate (10), bending the metal plate (10) into a tubular shape such that one of the pair of second end sides (22A, 22B) and the other of the pair of second end sides (22A, 22B) are in abutment with each other and the first surface (11A) is located on an inner surface side; and
joining one of the pair of second end sides (22A, 22B) and the other of the pair of second end sides (22A, 22B) after the bending the metal plate (10) into the tubular shape.

2. The method of manufacturing the battery case according to claim 1, further comprising forming a gas-discharge valve (150) constituted of a recess (15) in a second surface (11B) of the metal plate (10) opposite to the first surface (11A).

3. The method of manufacturing the battery case according to claim 2, wherein the forming the gas-discharge valve (150) includes forming the recess (15) in the second surface (11B) of the metal plate (10) before the bending.

4. The method of manufacturing the battery case according to claim 2, wherein the forming the gas-discharge valve (150) includes forming the recess (15) in the second surface (11B) during the bending the metal plate (10).

5. The method of manufacturing the battery case according to any one of claims 1 to 4, wherein
the bending the metal plate (10) into the tubular shape includes bending the metal plate (10) along a bending line (23A, 23B, 23C, 23D) that is in a form of a straight line extending in parallel with the pair of second end sides (22A, 22B),
the first thin portion (12A) includes a first region (12A1) overlapping the bending line (23A, 23B, 23C, 23D), and a second region (12A2) separated from the bending line (23A, 23B, 23C, 23D) in a direction in which the pair of first end sides (21A, 21B) extend,
the first region (12A1) has a first length (L1) in a direction in which the pair of second end sides (22A, 22B) extend, and the second region (12A2) has a second length (L2) in the direction in which the pair of second end sides (22A, 22B) extend, and
the first length (L1) is larger than the second length (L2).

6. The method of manufacturing the battery case according to claim 5, wherein
the second thin portion (12B) includes a third region overlapping the bending line (23A, 23B, 23C, 23D), and a fourth region separated from the bending line (23A, 23B, 23C, 23D) in the direction in which the pair of first end sides (21A, 21B) extend,
the third region has a third length in the direction in which the pair of second end sides (22A, 22B) extend, and the fourth region has a fourth length in the direction in which the pair of second end sides (22A, 22B) extend, and
the third length is larger than the fourth length.

7. The method of manufacturing the battery case according to any one of claims 1 to 6, wherein the metal plate (10) is bent into a prismatic tubular shape.

8. The method of manufacturing the battery case according to any one of claims 1 to 7, wherein
an ordinary portion (14) located between the first thin portion (12A) and the second thin portion (12B) is formed in the metal plate (10),
a thickness (T1) of each of the first thin portion (12A) and the second thin portion (12B) is smaller than a thickness (T3) of a base material of the metal plate (10), and
a thickness (T3) of the ordinary portion (14) is substantially the same as the thickness (T3) of the base material of the metal plate (10).

9. The method of manufacturing the battery case according to any one of claims 1 to 7, wherein
a first thick portion (17A) adjacent to the first thin portion (12A) and a second thick portion (17B) adjacent to the second thin portion (12B) are formed in the metal plate (10),
a thickness (T1) of each of the first thin portion (12A) and the second thin portion (12B) is smaller than a thickness (T3) of a base material of the metal plate (10), and
a thickness (T2) of each of the first thick portion (17A) and the second thick portion (17B) is larger than the thickness (T3) of the base material of the metal plate (10).

10. A method of manufacturing a battery, the method comprising:
forming a first thin portion (12A) in a metal plate (10) by providing a first recess (13A) in a first surface (11A) of the metal plate (10), and forming a second thin portion (12B) in the metal plate (10) by providing a second recess (13B) in the first surface (11A) of the metal plate (10);
cutting the metal plate (10) into a substantially rectangular shape having a pair of first end sides (21A, 21B) and a pair of second end sides (22A, 22B), wherein one of the pair of first end sides (21A, 21B) is formed by cutting the first thin portion (12A), and the other of the pair of first end sides (21A, 21B) is formed by cutting the second thin portion (12B);
after the cutting the metal plate (10), bending the metal plate (10) into a tubular shape such that one of the pair of second end sides (22A, 22B) and the other of the pair of second end sides (22A, 22B) are in abutment with each other and the first surface (11A) is located on an inner surface side;
after the bending the metal plate (10) into the tubular shape, forming a tubular battery case (110) by joining one of the pair of second end sides (22A, 22B) and the other of the pair of second end sides (22A, 22B);
inserting an electrode assembly (200) into the tubular battery case (110);
sealing, by a first sealing plate (120), a first opening (113) located on one side of the tubular battery case (110); and
sealing, by a second sealing plate (130), a second opening (114) located on the other side of the tubular battery case (110).
